# EUROPÄISCHE PATENTANMELDUNG

(11) **EP 1 797 935 A1**
(43) Veröffentlichungstag der Anmeldung: **20.06.2007**
(21) Anmeldenummer: 05027177.4
(22) Anmeldetag: 13.12.2005
(51) Int. Cl.: B01D 21/00, B01D 1/16, B01D 5/00

(54) **Verfahren und Vorrichtung zur Behandlung von mit Schwebstoffen verunreinigtem Brauchwasser**

(71) Anmelder: Wolf, Peter, 26209 Hatten (DE); Jaske, Wolfgang, 49811 Lingen (DE)
(72) Erfinder: Wolf, Peter, 26209 Hatten (DE); Jaske, Wolfgang, 49811 Lingen (DE)
(74) Vertreter: Siekmann, Gunnar

(57) **Zusammenfassung**

Bei einem Verfahren zur Behandlung von Abwässern mit Schwebstoffen, insbesondere von Farbwaschwässern, wird das Abwasser zunächst einer Sedimentation (2) zugeführt, wobei das dabei entstehende Sediment einer Schlammbehandlung (5) zugeführt wird, während das bei der Sedimentation vorbehandelte Abwasser durch Verdunstung und Kondensation (14) weiter gereinigt wird. Dadurch ist ein kostengünstiges Reinigungsverfahren für Abwässer mit Schwebstoffen möglich.

## Beschreibung

Die Erfindung betrifft ein Verfahren zur Behandlung von mit Schwebstoffen verunreinigtem Brauchwasser, insbesondere von Farbwaschwasser. Weiterhin betrifft die Erfindung eine Vorrichtung zur Durchführung des Verfahrens.

Die WO 03/068358 A1 beschreibt ein gattungsgemäßes Verfahren sowie eine gattungsgemäße Vorrichtung zur Behandlung von mit Schwebstoffen verunreinigtem Brauchwasser mit einem Verdunster, in dessen einen geschlossenen Kreislauf ausbildenden Prozeßstrom das Brauchwasser aufkonzentriert wird. Andere Vorrichtungen zur Behandlung von Klärschlämmen oder mit Schwebstoffen verunreinigten Flüssigkeiten sind aus der DE 30 27 454 A1, der EP 0 318 432, der DD 159 767 A oder der DE 34 26 737 A1 bekannt.

In der Wellpappen-Industrie fallen bei der Produktion der Wellpappe und bei der Reinigung der Druckwerke aus dem Wellpappendruck erhebliche Mengen an Brauchwasser an, das durch seine Verunreinigungen mit Leim, Farbresten und Faserbestandteilen aus der Pappe als überwachungsbedürftiger Abfall zur Beseitiung zu deklarieren und zu entsorgen ist. Derzeit wird das verunreinigte Brauchwasser in den Wellpappenwerken als Leimabwasser und als Farbwaschwasser getrennt erfaßt, um die Entsorgung kostengünstiger darzustellen. Das Leimwasser kann durch seinen hohen C-Gehalt als Energieträger den Kläranlagen zugeführt werden. Hier fallen lediglich Transportkosten und Schmutzwassergebühren an, da es wegen seiner Klebeeigenschaften nicht eingeleitet werden darf.

Das Farbwaschwasser ist ebenfalls nicht einleitfähig. Die Entsorgung dieses schwer zu reinigenden Abfalls ist kostenintensiv, da je nach Art und Beschaffenheit der Abfallerfassung und -behandlung ein ebenfalls überwachungsbedürftiger Schlamm anfällt. Aufgrund von neuen, bereits in Verordnungen und Gesetzen verbindlich beschlossenen Auflagen steigen die Entsorgungspreise der Entsorgungsunternehmen insbesondere aufgrund der Energiekosten an, so daß die Entsorgungssicherheit zu vertretbaren Kosten nicht gewährleistet ist.

Der Stand der Technik ist im "Handbuch zur Umweltgesetzgebung" dargelegt, das im Auftrag des Verbandes der Wellpappen-Industrie e.V. Darmstadt, 2. Ausgabe 1998 durch Chemie & Umwelt Beratung Dr. Eckhard Dempewolf, Am Gockert 81, 64354 Rheinheim-Georgenhausen, erstellt wurde. Ergebnis dieser in dem Handbuch veröffentlichten Studie ist, daß die Behandlung des Farbwaschwassers einzig durch die marktübliche Fällung und Flockung unter Verwendung geeigneter Flockungsmittel und einer anschließenden Ultra- bzw. Nanofiltration zufriedenstellende Ergebnisse liefert. Bei der Fällung und Flockung ist jedoch ein erheblicher Einsatz von teuren Flockungschemikalien notwendig. Zudem kann der hohe Energiebedarf bei der anschließenden Ultra- bzw. Nanofiltration zwangsläufig nur durch teure Primärenergie gedeckt werden. Das so behandelte Farbwaschwasser ist auch nach dieser Reinigung nicht einleitfähig, da im Farbwaschwasser gelöstes Kupfer weder durch die Flockung noch durch anschließende Ultra- bzw. Nanofiltration erfaßt wird. Das behandelte Farbwaschwasser hat eine opalisierend graue Farbe und kann unter Inkaufnahme erheblicher verfahrenstechnischer Nachteile für die Leimzubereitung verwendet werden. Der in großem Umfang entstehende Schlamm ist nach wie vor als besonders überwachungsbedürftiger Abfall kostenintensiv zu entsorgen.

Ein weiterer nicht zu unterschätzender Kostenfaktor bei der Fällung bzw. Flockung mit anschließender Ultra- bzw. Nanofiltration ist der hohe personelle Aufwand, der durch die ständige Kontrolle des Systems, sowie der täglich anfallenden Arbeiten entsteht. Aufgrund sich ständig ändernder Verunreinigungswerte des mit Schwebstoffen verunreinigten Brauchwassers und aufgrund des Erfordernisses, die Filter der Anlage regelmäßig zu reinigen und auszuwechseln, entstehen weitere Kosten.

Auch andere auf dem Markt befindliche thermische Abwasseraufbereitungsverfahren, beispielsweise die Infrarotwärmeverdampfung, sind aufgrund ihres hohen Primärenergieverbrauchs unwirtschaftlich. Die Vakuumdampfdestillation weist bei ebenfalls hohem Primärenergieeinsatz eine geringere Reinigungsleistung auf.

Die bekannten Verfahren sind somit entweder aufgrund ihrer Verfahrensweise oder aufgrund der Tatsache, daß der Hauptbestandteil des Brauchwassers auch nach der Behandlung nicht als Abwasser nach dem Wasserhaushaltsgesetz eingeleitet werden darf, sondern als Abfall nach dem Bundesimmissionsschutzgesetz genehmigungspflichtig ist, ungeeignet. Eine Genehmigung ist mit erheblichem bürokratischen Aufwand verbunden. Ebenso bleibt die Nachweispflicht für den Verbleib der Abfallstoffe und das Erstellen der Abfallbilanzen und des Abfallwirtschaftskonzepts bestehen. Im Falle einer Zertifizierung nach ISO 14000 ff. oder EMAS stellt dies eine zusätzliche, mit Mehrverwaltung und deshalb auch mit Mehrkosten verbundene Hürde auf dem Weg einer wirtschaftlich effizienten Brauchwasseraufbereitung dar.

Der Erfindung liegt die Aufgabe zugrunde, ein kostengünstiges Verfahren und eine Vorrichtung zu schaffen, mit denen auch größere Mengen mit Schwebstoffen verunreinigten Brauchwassers besonders kostengünstig behandelt werden können.

Diese Aufgabe ist mit einem Verfahren mit den Merkmalen des Patentanspruchs 1 und einer Vorrichtung mit den Merkmalen des Patentanspruchs 13 gelöst. Vorteilhafte Weiterbildungen der Erfindung sind in den jeweils auf diese Patentansprüche rückbezogenen Unteransprüchen angegeben.

Nach dem erfindungsgemäßen Verfahren wird das Brauchwasser mit einem Sedimentationsbehälter durch Abscheidung eines sedimentären Grobschlammes vorgereinigt. Nachfolgend wird der sedimentäre Grobschlamm in einem Luftstrom eines Schlammtrockners zu Feststoffen getrocknet. Dem vorgereinigten Brauchwasser wird dann in einem Prozeßstrom eines Verdunsters Wasserdampf entzogen, so daß die im vorgereinigten Brauchwasser verbliebenen Schwebstoffe in einem Brauchwasserkonzentrat aufkonzentriert werden.

Der Sedimentationsbehälter ist in seiner Größe so bemessen, daß für das Brauchwasser eine Verweildauer von ca. ein bis zwei Tagen entsteht. Während dieser Verweildauer sinken die im Brauchwasser enthaltenen Schwebstoffe und setzen sich am Boden des Sedimentationsbehälters als pumpfähiger sedimentierter Grobschlamm ab. Zur kontinuierlichen Durchführung des erfindungsgemäßen Verfahrens fungiert der Sedimentationsbehälter außerdem als Puffer- bzw. Vorratsbehälter, der die Aufnahme größerer Mengen des verunreinigten Brauchwassers ermöglicht. Die Sedimentation stellt in dem erfindungsgemäßen Verfahren einen besonders kostengünstigen Verfahrensschritt dar, bei dem sich die gröberen im Brauchwasser enthaltenen Schwebstoffe innerhalb der vorbestimmten Verweildauer ohne den Einsatz teurer Primärenegie zu einem sedimentären Grobschlamm absetzen. Die Sedimentation bildet damit die Basis für eine besonders effiziente, Trocknung der im sedimentären Grobschlamm gebundenen Feststoffe.

Durch die nachfolgende Verdunstung von Wasser aus dem vorgereinigten Brauchwasser, reduziert sich im nächsten Verfahrensschritt die Menge des zur Weiterbehandlung anfallenden Brauchwasserkonzentrates maßgeblich, so daß auch sämtliche bei der Weiterbehandlung anfallenden Folgekosten reduziert werden können. Damit ist insgesamt ein Verfahren geschaffen, mit dem auch größere Mengen mit Schwebstoffen verunreinigtes Brauchwasser kostengünstig behandelt werden können.

Nach einer ersten Weiterbildung des erfindungsgemäßen Verfahrens wird das Brauchwasserkonzentrat mit einem Absetzbehälter durch Abscheidung eines sedimentären Feinschlammes vorgereinigt. Nachfolgend wird der sedimentierte Feinschlamm im Luftstrom des Schlammtrockners zu Feststoffen getrocknet. Die Verweilzeit des Brauchwasserkonzentrates in dem Absetzbehälter beträgt ca. zwei Tage, in denen die feineren Schwebstoffe als sedimentärer Feinschlamm am Boden des Absetzbehälters sedimentieren. Die hohe Dichte der Schwebstoffe in dem Brauchwasserkonzentrat gewährleistet eine hohe Effektivität bei der Abscheidung des sedimentären Feinschlammes.

Nach einer nächsten Weiterbildung der Erfindung wird das vorgereinigte Brauchwasserkonzentrat aus dem Absetzbehälter in das vorgereinigte Brauchwasser des Sedimentationsbehälters eingeleitet. Die im vorgereinigten Brauchwasserkonzentrat verbliebenen Schwebstoffe werden somit solange dem erfindungsgemäßen Verfahren zugeführt, bis sie in Form des sedimentären Grobschlammes oder des sedimentären Feinschlammes aus dem Brauchwasser bzw. Brauchwasserkonzentrat ausgeschieden werden.

Nach einer besonders vorteilhaften Weiterbildung der Erfindung wird dem am Verdunster austretenden Prozeßstrom mit dem Trägerstrom eines Kondensatwärmetauschers Kondenswasser entzogen. Derweil besteht der Prozeßstrom aus einem mit Wasserdampf gesättigten Luftstrom. Durch Abkühlung des Prozeßstromes mit dem Trägerstrom des Kondensatwärmetauschers kondensiert aus dem Prozeßstrom Wasserdampf aus.

Nachfolgend wird der im Kondensatwärmetauscher vom Prozeßstrom vorgewärmte Trägerstrom in einem Flüssigkeitswärmetauscher von einem Wärmerückgewinnungsstrom auf Prozeßtemperatur erwärmt. Der am Flüssigkeitswärmetauscher austretende, Prozeßtemperatur aufweisende Trägerstrom wird nachfolgend dem Verdunster zugeführt.

Die Restwärme des am Verdunster austretenden Trägerstroms wird in einem Vorkühler an den Luftstrom des Schlammtrockners abgegeben, so daß ein besonders hoher Wärmerückgewinnungsgrad erreichbar ist.

Das bei der Kondensation im Kondensatwärmetauscher anfallende Kondenswasser wird in den am Vorkühler eintretenden Trägerstrom bzw. in den am Flüssigkeitswärmetauscher austretenden Trägerstrom eingeleitet. Die Einleitung erfolgt vorzugsweise in einen Kondensatvorratsbehälter, der zwischen dem Flüssigkeitswärmetauscher und dem Vorkühler angeordnet ist.

Die Restwärme des am Kondensatwärmetauscher austretenden Prozeßstromes wird mit Vorteil in einer Füllkörperschicht an den aus dem Vorkühler austretenden abgekühlten Trägerstrom abgegeben. Bei diesem Kühlschritt wird dem Prozeßstrom nochmals Kondenswasser entzogen, wobei der Prozeßstrom unter die Temperatur des Wärmerückgewinnungsstromes im Wärmerückgewinnungskreislauf abkühlt. Das in der Füllkörperschicht am Trägerstrom kondensierende Kondenswasser wird vom Trägerstrom aufgenommen und mit diesem nachfolgend im Flüssigkeitswärmetauscher weiter erwärmt.

Nach einer nächsten Weiterbildung der Erfindung wird aus den am Schlammtrockner abgeführten Feststoffen in einer Feststoffvergasung ein energiereiches Gas gewonnen, das verbrannt wird, wobei die im Verbrennungsgas enthaltene Wärme in einem Abgaswärmetauscher an den Wärmerückgewinnungsstrom abgegeben wird. Dabei werden die Feststoffe analog einem Holzvergaser zuerst unter Sauerstoffmangel entgast. Als Verbrennungsprodukte entstehen nutzbare Energie, die im Abgaswärmetauscher in Form von Wärme an den Wärmerückgewinnungsstrom abgegeben wird und eine innerte Asche, die stark kupferhaltig ist und somit der Kupferverhüttung zugeführt werden kann.

Die im Abgaswärmetauscher an den Wärmerückgewinnungsstrom abgegebene Wärme wird anschließend im Flüssigkeitswärmetauscher an den Trägerstrom übertragen, der auf die für den Verdunster erforderliche Prozeßtemperatur weiter erwärmt wird. Die Restwärme des am Flüssigkeitswärmetauscher austretenden Wärmerückgewinnungsstromes wird bevorzugt in einem Nachkühler an den am Vorkühler austretenden Luftstrom abgegeben. Der am Nachkühler austretende abgekühlte Wärmerückgewinnungsstrom wird dem Abgaswärmetauscher erneut zugeführt, womit der Wärmerückgewinnungskreislauf geschlossen ist.

Das aus dem Sedimentationsbehälter austretende vorgereinigte Brauchwasser wird als Zulaufstrom bevorzugt gegen Kondenswasser ausgetauscht, das als Trägerteilstrom aus dem Trägerstrom abgeführt wird. Die im abgeführten Trägerteilstrom enthaltene Wärme wird in einem Restwärmetauscher an den das vorgereinigte Brauchwasser führenden Zulaufstrom abgegeben.

Um die dem erfindungsgemäßen Verfahren anhaftenden vorteilhaft kleinen Energieverluste ausgleichen zu können, wird vorzugsweise, aus einer externen Energiequelle stammende Wärme in einem Zusatzwärmetauscher an den Trägerstrom abgegeben.

Die erfindungsgemäße Vorrichtung ist dadurch gekennzeichnet, daß sie wenigstens einen das verunreinigte Brauchwasser aufnehmenden Sedimentationsbehälter aufweist, daß der Sedimentationsbehälter an einen Schlammtrockner angeschlossen ist und daß der Sedimentationsbehälter an eine Brauchwasseraufbereitungsanlage mit wenigstens einem Verdunster angeschlossen ist. Der Sedimentationsbehälter ist in seiner Größe derart bemessen, daß für das mit Schwebstoffen befrachtete Brauchwasser aus den Druckwerken einer Flexo-Farbdruckmaschine eine Verweildauer von ca. ein bis zwei Tagen entsteht. Der Sedimentationsbehälter ist als Vorratsbehälter ausgebildet, der einen kontinuierlichen Betrieb der Flexo-Farbdruckmaschine gewährleistet. Der Innenraum des Sedimentationsbehälters weist einen nach unten hin spitz zulaufenden, als Sumpf bezeichneten Bodenbereich auf, in den das Ansaugrohr einer Eintauchpumpe, beispielsweise einer Exzenterschneckenpumpe, zum Absaugen des sedimentierten Grobschlammes hineinragt. Um ein zuverlässiges Nachrutschen des sedimentierten Grobschlammes in den Sumpf hinein zu gewährleisten, wird vorgeschlagen, den Sedimentationsbehälter mit Vibrationsmotoren auszurüsten.

Bevorzugt weist die erfindungsgemäße Vorrichtung jedoch zwei in Reihe geschaltete Sedimentationsbehälter auf, die durch einen Überlauf miteinander verbunden sind. Durch den Überlauf wird das teilweise vorgereinigte Brauchwasser aus dem vorgeschalteten Sedimentationsbehälter im laufenden Betrieb in den nachgeschalteten Sedimentationsbehälter überführt. Der vorgeschaltete Sedimentationsbehälter ist baugleich wie der nachgeschaltete Sedimentationsbehälter ausgeführt. Durch die weitere Verweilzeit des Brauchwassers im nachgeschalteten Sedimentationsbehälter von ebenfalls etwa zwei Tagen sedimentiert der feinere Feststoffanteil, der durch den Überlauf aus dem vorgeschalteten Sedimentationsbehälter überführt wurde. Zum Absaugen des sedimentierten Feinschlammes ragt in den nachgeschalteten Sedimentationsbehälter ebenfalls das Ansaugrohr einer Eintauchpumpe hinein. Oberhalb des Sumpfes ist der nachgeschaltete Sedimentationsbehälters über eine Pumpleitung mit der Brauchwasseraufbereitungsanlage verbunden.

Der Schlammtrockner ist als segmentierter, mit vertikal angeordneten Scheiben bestückter Scheibentrockner ausgeführt, der speziell auf die Nutzung von Luftströmen mit niedriger Temperatur, also vor allem mittels Abwärme erwärmter Luftströme ausgelegt ist. Der Schlammtrockner weist mehrere übereinander angeordnete sich drehende Scheiben auf, auf denen der zu trocknende Grobschlamm bzw. der zu trocknende Feinschlamm dem erwärmten Luftstrom ausgesetzt wird. Der Durchmesser der Scheiben wird in Abhängigkeit der zu trocknenden Grob- bzw. Feinschlammenge und die Anzahl der übereinander angeordneten Scheiben wird in Abhängigkeit vom gewünschten Trocknungsgrad ausgelegt. Dazu weist der Schlammtrockner mit Vorteil einen modularen Aufbau auf, mit dem er sich wechselnden Anforderungen entsprechend anpassen läßt.

Mit dem in der Brauchwasseraufbereitungsanlage angeordneten Verdunster wird das mit den bislang nicht abgesetzten, insbesondere sehr feinen Schwebstoffen befrachtete vorgereinigte Brauchwasser durch Verdunstung aufkonzentriert.

Nach einer Weiterbildung der Erfindung sind der Schlammtrockner und der Sedimentationsbehälter über einen Absetzbehälter miteinander verbunden, in dem der sedimentierte Grobschlamm und der sedimentierte Feinschlamm vorentwässert werden. Das bei der Vorentwässerung anfallende Wasser wird in den Sedimentationsbehälter zurückgeführt.

Nach einer nächsten Weiterbildung der Erfindung ist der Schlammtrockner an eine Feststoffvergasung mit nachfolgender Gasverbrennungsanlage angeschlossen, die über wenigstens einen Abgaswärmetauscher mit der Brauchwasseraufbereitungsanlage gekoppelt ist. Mit dem Abgaswärmetauscher wird die von den Verbrennungsgasen getragene Verbrennungswärme an den Trägerstrom der Brauchwasseraufbereitungsanlage abgegeben. Der Abgaswärmetauscher ist vorzugsweise Teil einer Energiekonditionierungseinheit, die es ermöglicht, unterschiedliche Energieströme, insbesondere Abwärmeströme und Primärenergieströme so zu konditionieren, daß ein möglichst hoher Energierückgewinnungsgrad bzw. ein möglichst hoher Wirkungsgrad der erfindungsgemäßen Vorrichtung erreicht wird. Hierbei läßt sich in der Regel die durch externe Energiequellen zugeführte teure Primärenergie gegen Sekundärenergie aus dem Wärmerückgewinnungskreislauf substituieren.

Weiterhin wird vorgeschlagen, den Schlammtrockner über wenigstens eine Wärmetauschereinheit mit der Brauchwasseraufbereitungsanlage zu koppeln. Mit der Wärmetauschereinheit wird der in den Schlammtrockner eintretende Luftstrom mit der in der Brauchwasseraufbereitungsanlage anfallenden Restwärme vorgewärmt.

Der Großteil der in der Brauchwasseraufbereitungsanlage benötigten Energie wird jedoch dadurch gedeckt, daß die Brauchwasseraufbereitungsanlage wenigstens einen Kondensatwärmetauscher aufweist, der zur Energierückgewinnung über eine Trägerstromleitung mit dem Verdunster gekoppelt ist.

Ein Ausführungsbeispiel der Erfindung, aus dem sich weitere erfinderische Merkmale ergeben, ist in der Zeichnung dargestellt. Es zeigen:
- Fig. 1:: ein Blockschaltbild des erfindungsgemäßen Verfahrens;
- Fig. 2:: einen Energielaufplan des erfindungsgemäßen Verfahrens; und

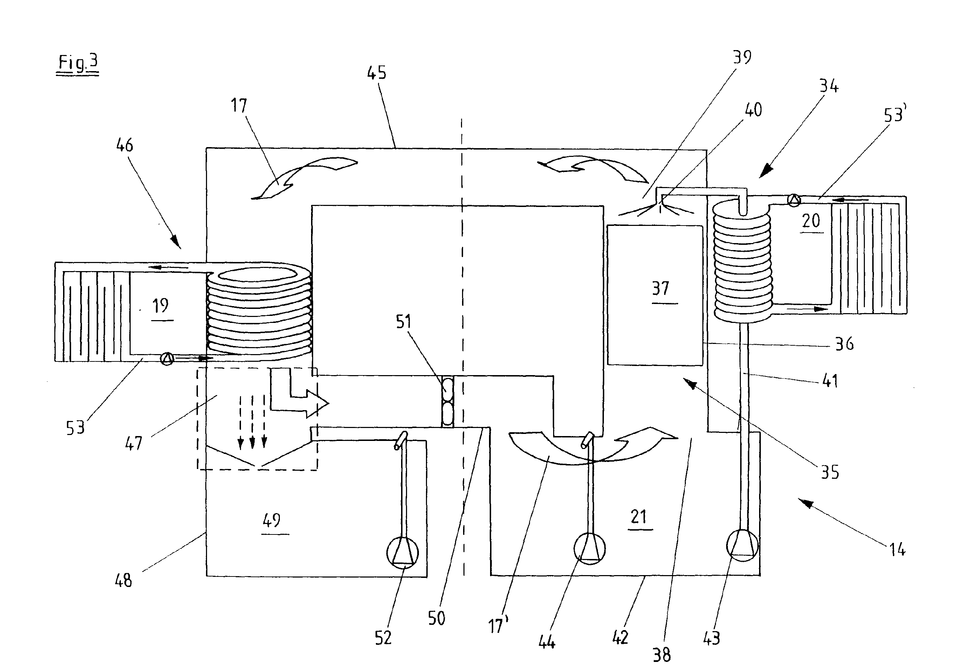

- Fig. 3:: eine schematische Darstellung der Brauchwasseraufbereitungsanlage gemäß der Fig. 1 und 2.

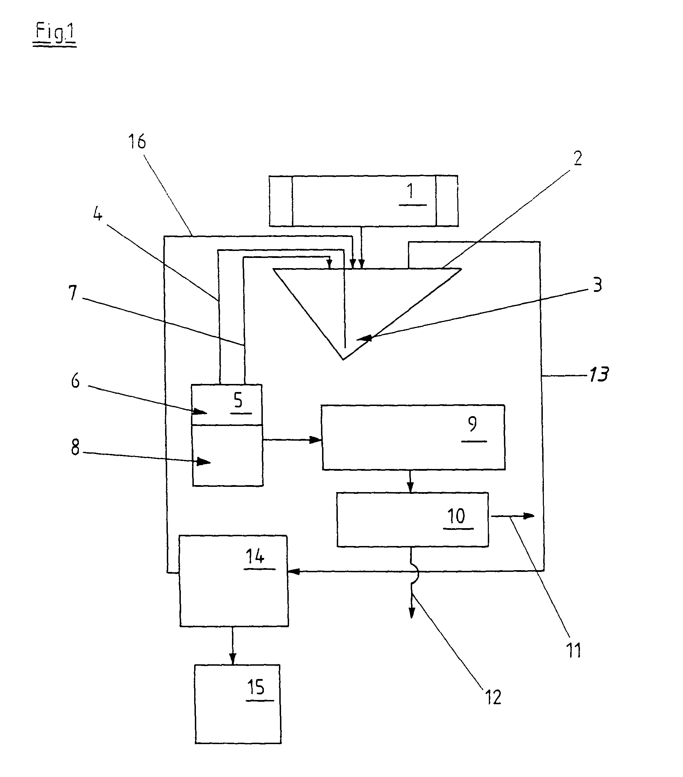

Die Fig. 1 zeigt ein Blockschaltbild des erfindungsgemäßen Verfahrens, wobei eine Flexo-Druckmaschine 1 gereinigt wird und das dabei entstehende mit Schwebstoffen verunreinigte Brauchwasser in einen Sedimentationsbehälter 2 geleitet wird. Während einer vorbestimmten Verweilzeit setzt sich ein Teil der Schwebstoffe im als Sumpf bezeichneten unteren Bereich 3 des Sedimentationsbehälters 2 als sedimentärer Grobschlamm ab. Nachfolgend wird der im unteren Bereich 3 des Sedimentationsbehälters 2 sedimentierte Grobschlamm über eine erste Pumpleitung 4 in einen Absetzbehälter 5 geleitet. Der im Absetzbehälter 5 entstehende Wasseranteil 6 wird durch einen Überlauf 7 zurück in den Sedimentationsbehälter 2 geleitet. Der im Absetzbehälter 5 anfallende Schlammanteil 8 wird einem Schlammtrockner 9 zugeführt, in der der Schlammanteil 8 zu Feststoffen getrocknet wird. Dem Schlammtrockner 9 ist eine Feststoffvergasung 10 nachgeschaltet, in der die Feststoffe unter Entstehung von Verbrennungsgas 11 und Asche 12 verbrannt werden. Aus dem Sedimentationsbehälter 2 wird das vorgereinigte Brauchwasser über eine zweite Pumpleitung 13 einer Brauchwasseraufbereitungsanlage 14 zugeführt, in der dem vorgereinigten Brauchwasser durch Verdunstung und nachfolgende Kondensation Kondenswasser entzogen wird, das einer Produktion 15, z. B. vom Leim für die Flexo-Druckmaschine 1, zugeführt wird. Das durch den Entzug von Kondenswasser in der Brauchwasseraufbereitungsanlage 14 entstehende Brauchwasserkonzentrat wird über eine Rückführleitung 16 in den Sedimentationsbehälter 2 zurückgeführt.

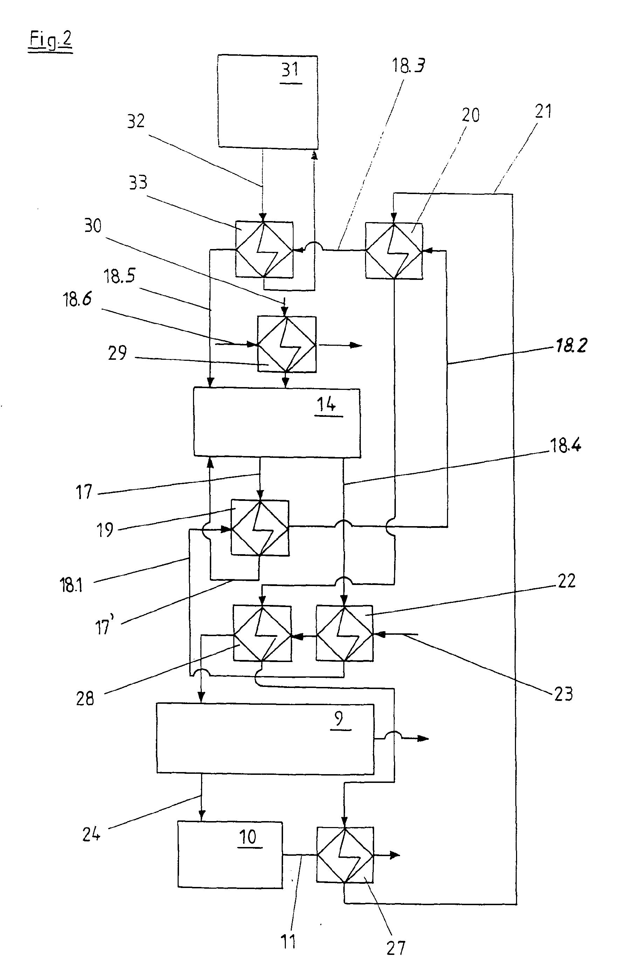

Die Fig. 2 zeigt einen Energielaufplan des erfindungsgemäßen Verfahrens, dem zu entnehmen ist, daß dem an der Brauchwasseraufbereitungsanlage 14 austretenden Prozeßstrom 17 mit dem Trägerstrom 18.1 eines Kondensatwärmetauschers 19 Kondenswasser entzogen wird. Nachfolgend wird der im Kondensatwärmetauscher 19 vom Prozeßstrom 17 vorgewärmte Trägerstrom 18.2 in einem Flüssigkeitswärmetauscher 20 von einem Wärmerückgewinnungsstrom 21 auf Prozeßtemperatur erwärmt. Der am Flüssigkeitswärmetauscher 20 austretende, Prozeßtemperatur aufweisende Trägerstrom 18.3 wird nachfolgend dem in der Wasseraufbereitungsanlage 14 integrierten Verdunster zugeführt. Die Restwärme des am Verdunster austretenden vorgereinigten Brauchwasser durch Verdunstung und nachfolgende Kondensation Kondenswasser entzogen wird, das einer Produktion 15, z. B. vom Leim für die Flexo-Druckmaschine 1, zugeführt wird. Das durch den Entzug von Kondenswasser in der Brauchwasseraufbereitungsanlage 14 entstehende Brauchwasserkonzentrat wird über eine Rückführleitung 16 in den Sedimentationsbehälter 2 zurückgeführt.

Die Fig. 2 zeigt einen Energielaufplan des erfindungsgemäßen Verfahrens, dem zu entnehmen ist, daß dem an der Brauchwasseraufbereitungsanlage 14 austretenden Prozeßstrom 17 mit dem Trägerstrom 18.1 eines Kondensatwärmetauschers 19 Kondenswasser entzogen wird. Nachfolgend wird der im Kondensatwärmetauscher 19 vom Prozeßstrom 17 vorgewärmte Trägerstrom 18.2 in einem Flüssigkeitswärmetauscher 20 von einem Wärmerückgewinnungsstrom 21 auf Prozeßtemperatur erwärmt. Der am Flüssigkeitswärmetauscher 20 austretende, Prozeßtemperatur aufweisende Trägerstrom 18.3 wird nachfolgend dem in der Wasseraufbereitungsanlage 14 integrierten Verdunster zugeführt. Die Restwärme des am Verdunster austretenden Trägerstroms 18.4 wird in einem Vorkühler 22 an den Luftstrom 23 des Schlammtrockners 9 abgegeben. Das dem Prozeßstrom 17 im Kondensatwärmetauscher 19 entzogene Kondenswasser wird in den am Vorkühler 22 eintretenden Trägerstrom 18.4 eingeleitet. Die Restwärme des am Kondensatwärmetauscher 19 austretenden Prozeßstroms 17' wird in einer Füllkörperschicht (nicht dargestellt) an den aus dem Vorkühler 22 austretenden abgekühlten Trägerstrom 18.1 abgegeben. Der aus dem Schlammtrockner 9 abgeführte Feststoffmassestrom 24 wird einer Feststoffvergasung 10 zugeführt, in der der Feststoffmassestoff 24 verbrannt wird. Die im Verbrennungsgas 11 enthaltene Wärme wird in einem Abgaswärmetauscher 27 an den Verdunstungseinrichtung 34 weist einen Verdunster 35 mit einer in einer Trennkammer 36 angeordneten Füllkörperschicht 37 auf. Im unteren Bereich weist der Verdunster 35 eine Lufteinströmöffnung 38 auf, deren Strömungsquerschnitt in seiner Größe etwa dem horizontalen Querschnitt der Trennkammer 36 entspricht. Im oberen Bereich weist der Verdunster 35 eine Luftausströmöffnung 39 auf, deren Strömungsquerschnitt ebenfalls etwa dem horizontalen Querschnitt der Trennkammer 36 entspricht. Auf der Trennkammer 36 ist ein Verteilersystem 40 angeordnet, das über eine durch den Flüssigkeitswärmetauscher 20 hindurchführende Versorgungsleitung 41 an einem Konzentratvorratsbehälter 42 für das Brauchwasserkonzentrat 21 angeschlossen ist. Dazu weist das Verteilersystem 40 eine der Versorgungsleitung 41 zugeordnete erste Brauchwasserkonzentratpumpe 43 auf. Weiterhin ist dem Konzentratvorratsbehälter 42 eine zweite Brauchwasserkonzentratpumpe 44 zum Abpumpen des aus dem vorgereinigten Brauchwasser gewonnenen Brauchwasserkonzentrats 21 zugeordnet. Eine Rohrleitung 45 verbindet die Luftausströmöffnung 39 des Verdunsters 35 mit der Kondensationseinrichtung 46. Diese weist den Kondensatwärmetauscher 19 auf, dessen Strömungsquerschnitt ebenfalls etwa die Größe des Strömungsquerschnittes der Trennkammer 36 mit Füllkörperschicht 37 aufweist. Dem Kondensatwärmetauscher 19 ist ein Gasflüssigseparator 47 nachgeschaltet, dem ein Kondensatvorratsbehälter 48 zum Abführen von Kondenswasser 49 zugeordnet ist. Der Gasflüssigseparator 47 ist über eine Rohrleitung 50 an die Lufteinströmöffnung 38 des Verdunsters 35 angeschlossen. Die für die Brauchwasseraufbereitungsanlage 14 erforderliche Strömungsenergie wird mittels eines in der Rohrleitung 50 angeordneten Gebläses 51 an den durch Pfeile verdeutlichten Prozeßstrom 17, 17' übertragen. Der Kondensatvorratsbehälter 48 ist über eine Austragspumpe 52 an die den Kondensatwärmetauscher 19 sowie den Flüssigkeitswärmetauscher 20 durchlaufende Trägerstromleitung 53, 53' angeschlossen.

## Patentansprüche

1. Verfahren zur Behandlung von mit Schwebstoffen verunreinigtem Brauchwasser, insbesondere von Farbwaschwasser,
**dadurch gekennzeichnet,**
**daß** das Brauchwasser mit einem Sedimentationsbehälter (2) durch Abscheidung eines sedimentären Grobschlammes vorgereinigt wird,
**daß** der sedimentäre Grobschlamm in einem Luftstrom (23) eines Schlammtrockners (9) zu Feststoffen getrocknet wird, und
**daß** dem vorgereinigten Brauchwasser in einem Prozeßstrom (17, 17') eines Verdunsters (35) Wasserdampf entzogen wird, so daß die im vorgereinigten Brauchwasser verbliebenen Schwebstoffe in einem Brauchwasserkonzentrat aufkonzentriert werden.

2. Verfahren nach Anspruch 1, **dadurch gekennzeichnet, daß** das Brauchwasserkonzentrat mit einem Absetzbehälter (5) durch Abscheidung eines sedimentären Feinschlammes vorgereinigt wird, und daß der sedimentäre Feinschlamm im Luftstrom (23) des Schlammtrockners (9) zu Feststoffen getrocknet wird.

3. Verfahren nach Anspruch 3, **dadurch gekennzeichnet, daß** das vorgereinigte Brauchwasserkonzentrat in das vorgereinigte Brauchwasser eingeleitet wird.

4. Verfahren nach einem der Ansprüche 1 bis 3, **dadurch gekennzeichnet, daß** dem am Verdunster (35) austretenden Prozeßstrom (17) mit dem Trägerstrom (18.1) eines Kondensatwärmetauschers (19) Kondenswasser (49) entzogen wird.

5. Verfahren nach Anspruch 4, **dadurch gekennzeichnet, daß** der im Kondensatwärmetauscher (19) vom Prozeßstrom (17) vorgewärmte Trägerstrom (18.2) in einem Flüssigkeitswärmetauscher (20) von einem Wärmerückgewinnungsstrom (21) weiter erwärmt und nachfolgend dem Verdunster (35) zugeführt wird.

6. Verfahren nach einem der Ansprüche 4 und 5, **dadurch gekennzeichnet, daß** die Restwärme des am Verdunster (35) austretenden Trägerstroms (18.4) in einem Vorkühler (22) an den Luftstrom (23) des Schlammtrockners (9) abgegeben wird.

7. Verfahren nach Anspruch 6, **dadurch gekennzeichnet, daß** das Kondenswasser (49) in den am Vorkühler (22) eintretenden Trägerstrom (18.4) eingeleitet wird.

8. Verfahren nach einem der Ansprüche 6 und 7, **dadurch gekennzeichnet, daß** die Restwärme des am Kondensatwärmetauscher (19) austretenden Prozeßstromes (17') in einer Füllkörperschicht (37) an den aus dem Vorkühler (22) austretenden abgekühlten Trägerstrom (18.1) abgegeben wird.

9. Verfahren nach einem der Ansprüche 5 bis 8, **dadurch gekennzeichnet, daß** aus den Feststoffen in einer Feststoffvergasung (10) energiereiches Gas gewonnen wird, das verbrannt wird, wobei die im Verbrennungsgas (26) enthaltene Wärme in einem Abgaswärmetauscher (27) an den Wärmerückgewinnungsstrom (21) abgegeben wird.

10. Verfahren nach einem der Ansprüche 6 bis 9, **dadurch gekennzeichnet, daß** dem am Flüssigkeitswärmetauscher (20) austretenden Wärmerückgewinnungsstrom (21) in einem Nachkühler (28) mit dem am Vorkühler (22) austretenden Luftstrom (23) Restwärme entzogen wird.

11. Verfahren nach einem der Ansprüche 4 bis 10, **dadurch gekennzeichnet, daß** aus dem Trägerstrom (18.4) ein Trägerteilstrom (18.6) abgeführt wird, und daß die im abgeführten Trägerteilstrom (18.6) enthaltene Restwärme in einem Restwärmetauscher (29) an einen vorgereinigtes Brauchwasser führenden Zulaufstrom (30) abgegeben wird.

12. Verfahren nach einem der Ansprüche 4 bis 11, **dadurch gekennzeichnet, daß** die Wärme eines aus einer externen Energiequelle (31) stammenden Primärenergiestroms (32) in einem Zusatzwärmetauscher (33) an den Trägerstrom (18.3) abgegeben wird.

13. Vorrichtung zur Behandlung von mit Schwebstoffen verunreinigtem Brauchwasser, insbesondere von Farbwaschwasser, zur Durchführung des Verfahrens nach einem Ansprüche 1 bis 12,
**dadurch gekennzeichnet,**
**daß** die Vorrichtung wenigstens einen das Brauchwasser aufnehmenden Sedimentationsbehälter (2) aufweist,
**daß** der Sedimentationsbehälter (2) an einen Schlammtrockner (9) angeschlossen ist, und
**daß** der Sedimentationsbehälter (2) an eine Brauchwasseraufbereitungsanlage (14) mit wenigstens einem Verdunster (35) angeschlossen ist.

14. Vorrichtung nach Anspruch 13, **dadurch gekennzeichnet, daß** der Schlammtrockner (9) und der Sedimentationsbehälter (2) über einen Absetzbehälter (5) miteinander verbunden sind.

15. Vorrichtung nach einem der Ansprüche 13 und 14, **dadurch gekennzeichnet, daß** der Schlammtrockner (9) an eine Feststoffvergasung (10) mit nachfolgender Gasverbrennungsanlage angeschlossen ist.

16. Vorrichtung nach Anspruch 15, **dadurch gekennzeichnet, daß** die Gasverbrennungsanlage über wenigstens einen Abgaswärmetauscher (27) mit der Brauchwasseraufbereitungsanlage (14) gekoppelt ist.

17. Vorrichtung nach einem der Ansprüche 13 bis 16, **dadurch gekennzeichnet, daß** der Schlammtrockner (9) über wenigstens eine Wärmetauschereinheit mit der Brauchwasseraufbereitungsanlage (14) gekoppelt ist.

18. Vorrichtung nach einem der Ansprüche 13 bis 17, **dadurch gekennzeichnet, daß** die Brauchwasseraufbereitungsanlage (14) wenigstens einen Kondensatwärmetauscher (19) aufweist, der zur Energierückgewinnung über eine Trägerstromleitung (53, 53') mit dem Verdunster (35) gekoppelt ist.
